# FASCICULE DE BREVET EUROPEEN

(11) **EP 3 131 741 B1**
(45) Date de publication et mention de la délivrance du brevet: **30.10.2019**
(21) Numéro de dépôt: 15720383.7
(22) Date de dépôt: 14.04.2015
(51) Int. Cl.: B29C 70/06, C08J 5/04, C08G 69/26, C08L 77/00, C08L 77/06

(54) **MATERIAU COMPOSITE THERMOPLASTIQUE A BASE DE POLYAMIDE SEMI-CRISTALLIN ET PROCEDE DE FABRICATION**
THERMOPLASTISCHES VERBUNDSTOFFMATERIAL AUS SEMIKRISTALLINEM POLYAMID UND VERFAHREN ZUR HERSTELLUNG DAVON
THERMOPLASTIC COMPOSITE MATERIAL MADE FROM A SEMI-CRYSTALLINE POLYAMIDE AND METHOD FOR MANUFACTURING SAME

(30) Priorité: 15.04.2014 FR 1453355
(43) Date de publication de la demande: 22.02.2017
(73) Titulaire: Arkema France, 92700 Colombes (FR)
(72) Inventeur: BRIFFAUD, Thierry, 27300 BERNAY (FR); HOCHSTETTER, Gilles, 94240 L'Hay les Roses (FR); CAPELOT, Mathieu, 27300 BERNAY (FR)
(86) Numéro de dépôt international: PCT/FR2015/050997
(87) Numéro de publication internationale: WO 2015/159015

(56) Documents cités:
- EP-A1- 1 988 113
- EP-A1- 2 325 260
- EP-A1- 2 535 365
- EP-A1- 2 586 585
- WO-A2-2011/015790
- US-A1- 2011 052 848

## Description

L'invention concerne une composition de ou pour un matériau composite thermoplastique avec une matrice en polyamide (PA) semi-cristallin comprenant des motifs amides Z, 10T et 6T, ladite composition ayant une température de fléchissement sous charge (HDT A) inférieure à 260°C et une température de fusion Tf inférieure ou égale à 270°C et couvre également un procédé de fabrication dudit matériau composite en particulier des pièces mécaniques ou de structure à base dudit matériau, l'utilisation de la composition de l'invention pour des pièces de matériau composite ainsi que la pièce composite qui en résulte et pour des applications dans les domaines de : l'automobile, électrique ou de l'électronique, ferroviaire, marin, transport routier, de l'éolien, du sport, aéronautique et spatial, du bâtiment, des panneaux et des loisirs.

La demande internationale WO/2013/060976 décrit une composition précurseur et son utilisation à l'état fondu et comprenant : a) au moins un prépolymère P(X)n dudit polymère thermoplastique, comprenant une chaîne moléculaire P possédant à ses extrémités n fonctions réactives X identiques, ledit prépolymère étant de structure semi-aromatique et/ou semi-cycloaliphatique, avec X étant une fonction réactive parmi: OH, NH₂ ou COOH, avec n allant de 1 à 3 b) au moins un allongeur de chaîne comprenant deux fonctions Y identiques, réactives avec l'une au moins desdites fonctions X.

Il n'est pas fait mention de la HDT de cette composition.

WO 2011/015790 décrit des compositions comprenant de 45 à 95% en poids d'un copolyamide semi-aromatique de formule A/X.T ayant un indice de polymolécularité inférieur à 3,5, et de 5 à 55% en poids d'au moins une polyoléfine réticulée.

EP 2 586 585 décrit des matériaux composites thermoplastiques de Tg supérieure ou égale à 80°C, renforcés avec des fibres synthétiques.

EP 1 988 113 décrit une composition de moulage à base d'un copolyamide 10T/6T avec :
- 40 à 95% mol de 10T
- 5 à 40% de 6T.

Ces compositions présentent un point de fusion supérieur à 270°C et selon ce brevet, il n'était pas connu que la combinaison PA10T/6T dans ce rapport molaire spécifique et comprenant des fibres de renfort, possédait également une HDT A étonnamment élevée, notamment supérieure à 260°C, préférentiellement supérieure à 270°C, en particulier de 270°C à 320°C. Tous les exemples de compositions à base de PA10T/6T dans les proportions revendiquées, comprenant des fibres de renfort, notamment des fibres de verre, décrivent des HDT A supérieures à 260°C.

Il est aussi précisé dans ce brevet que 30% mol des monomères du composant (A) correspondant à 10T/6T peuvent être substitués avec la condition que pas plus de 30% de la totalité des monomères ne soit formée par des lactames ou acides aminés, tels que le caprolactam, l'acide α,ε-aminocaproïque, l'acide α,ε-aminononanoïque, l'acide α,ε-aminoundecanoïque, le laurolactam et l'acide α,ε-aminododecanoïque.

Or il a été trouvé par la Demanderesse, de façon tout à fait inattendue que les compositions décrites dans EP 1 988 113, dans lesquelles le composant (A) est substitué par jusqu'à 30% d'un α,ε-amino-acide ou d'un lactame, notamment un α,ε-aminoundecanoïque, pour conduire à un polyamide de formule Z/10T/6T, en présence de fibres de renfort, présentent non seulement une valeur de point de fusion inférieure à 270°C mais également une valeur de HDT A très inférieure à 260°C.

Le choix de ce polyamide semi-cristallin Z/10T/6T particulier, comme matrice du matériau composite de l'invention, a comme intérêt par rapport aux autres, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse. Par contre, un point de fusion trop élevé, en particulier supérieur à 280°C, est en revanche néfaste car il nécessite la mise en oeuvre du composite à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide, avec comme conséquence l'affectation des propriétés de la matrice thermoplastique finale et du composite qui en résulte. La cristallinité dudit polymère doit être la plus élevée possible mais avec une température de fusion Tf pas trop élevée (Tf ≤ 270°C) pour optimiser les performances mécaniques et la vitesse de cristallisation et/ou la température de cristallisation la plus élevée possible, ceci pour réduire le temps de moulage avant éjection de la pièce composite moulée avec un choix sélectif de la composition dudit polyamide semi-cristallin.

Donc, l'objet de la présente invention est la mise en oeuvre de nouvelles compositions spécifiques de composite thermoplastique, en particulier à base de polyamide semi-cristallin, présentant un bon compromis entre des performances mécaniques élevées (tenue mécanique) en particulier à chaud et une mise en oeuvre facile.

Cela signifie qu'il y a comme objectif des compositions faciles à mettre en oeuvre avec des températures de transformation et de mise en oeuvre plus basses que celles pour d'autres compositions de l'état de l'art, avec un bilan énergétique global de mise en oeuvre plus favorable, un temps de cycle plus court et une productivité plus élevée. Plus particulièrement, la solution de l'invention, dans le cas de compositions réactives, permet en utilisant des compositions à base de prépolymères polyamides réactifs semi-cristallins, à la fois une cinétique de réaction et une cinétique de cristallisation rapide avec un temps de cycle plus court.

Donc, le premier objet de l'invention concerne une composition spécifique de polyamide (PA) semi-cristallin de formule pour un matériau composite thermoplastique ou une composition de matériau composite thermoplastique, avec une matrice thermoplastique, ladite composition ayant une HDT A inférieure à 260°C, en particulier inférieure à 240°C, notamment comprise de 210°C à moins de 240°C, telle que déterminée selon la norme ISO 75 f (barreaux posés à plat) méthode A (charge 1,8 MPa), rampe de température de chauffe 50°C.h⁻¹ et une Tf inférieure ou égale à 270°C, en particulier d'environ 260°C.

Cette composition peut être réactive par l'intermédiaire de prépolymères réactifs entre eux par condensation ou avec un allongeur de chaîne par polyaddition et sans élimination de sous produits volatils. Elle peut en alternative être une composition non réactive à base de polyamides polymères correspondant au polymère final de la matrice thermoplastique. Ladite composition spécifique est basée sur le choix sélectif de motifs amides Z, 10T et 6T à des proportions molaires spécifiques.

Un deuxième objet de l'invention concerne un procédé spécifique de fabrication dudit matériau composite thermoplastique et plus particulièrement de fabrication de pièces mécaniques ou des pièces de structure à base dudit matériau composite.

Un autre objet de l'invention concerne l'utilisation de la composition spécifique de PA de l'invention pour la fabrication d'un matériau composite thermoplastique de même composition et plus particulièrement de pièces mécaniques ou de structure à base de ce matériau.

Un autre objet de l'invention concerne le matériau composite thermoplastique qui résulte de ladite composition pour matériau composite.

Finalement, l'invention couvre une pièce mécanique ou pièce de structure à base de matériau composite obtenu par le procédé spécifique de l'invention ou qui résulte de l'utilisation de la composition spécifique de PA de l'invention.

Donc, le premier objet concerne une composition pour matériau composite thermoplastique ou une composition de matériau composite thermoplastique, ledit matériau composite comprenant des fibres de renfort ou autrement dit un renfort fibreux et une matrice thermoplastique imprégnant lesdites fibres (ou ledit renfort fibreux), ladite matrice étant à base d'au moins un polymère thermoplastique, avec, en ce qui concerne ladite composition :
- ledit polymère thermoplastique de matrice étant un polymère polyamide semi-cristallin comprenant des motifs amides Z, 10T et 6T ;
- ladite composition comprenant, en plus desdites fibres de renfort :
   a) une composition réactive comprenant ou constituée de, au moins un prépolymère (ou oligomère, avec oligomère et prépolymère signifiant la même chose pour la suite) polyamide réactif, ladite composition étant une composition précurseur dudit polymère polyamide de ladite matrice,
      ou en alternative à a)
   b) une composition non réactive d'au moins un polymère polyamide, y compris le polymère issu de la composition réactive a), ladite composition étant celle de ladite matrice thermoplastique,
et avec :
- ladite composition a) ou b) comprenant ou étant constituée de un ou plusieurs polyamides, y compris copolyamides statistiques ou séquencés qui sont des prépolymères (ou oligomères) selon a) ou qui sont des polymères selon b) et lesquels comprennent des motifs amides Z, 10T et 6T, sélectionnés comme suit :
- Z correspondant à un motif amide résultant :
   ∘ de la condensation d'au moins un lactame ou d'au moins un amino-acide en C₆-C₁₄,
   ∘ de la condensation d'une diamine et d'un diacide X.Y, X et Y étant en C₄-C₁₈, en particulier C₁₀-C₁₂,
   le taux molaire de Z étant : 0,0<Z≤ 30,0%,
- 10T est un motif amide majoritaire, résultant de la condensation d'une diamine en C₁₀, en particulier la décanediamine, et de l'acide téréphtalique, présent à un taux molaire allant de 40,0 à 95,0%,
- 6T est un motif amide résultant de la condensation d'une diamine en C6, en particulier l'hexanediamine, et de l'acide téréphtalique, présent à un taux molaire allant de 5,0 à 60,0%,
et sous la condition que la somme des taux molaires Z + 10T + 6T soit égale à 100%, ladite composition ayant une température de fléchissement sous charge (HDT A) inférieure à 260°C, en particulier comprise de 210°C à moins de 240°C et une température de fusion Tf inférieure ou égale à 270°C, notamment inférieure ou égale à 265°C, en particulier inférieure ou égale à 260°C.

Ladite composition est plus particulièrement une composition pour matériau composite thermoplastique. Cela signifie qu'elle permet l'obtention d'un matériau composite thermoplastique.

Avantageusement, le polymère polyamide de l'invention est choisi parmi le 6/10T/6T, le 12/10T/6T ou le 11/10T/6T, en particulier le 11/10T/6T. Avantageusement, le polymère polyamide est choisi parmi le 10.10/10T/6T, le 12.10/10T/6T, le 10.12/10T/6T, le 12.12/10T/6T, préférentiellement le 10.10/10T/6T, le 10.12/10T/6T.

Avantageusement, la proportion molaire de Z est comprise de 5,0 à 20,0%, notamment de 9,0 à 20,0%, en particulier de 10,0 à 20,0%, plus préférentiellement de 8,0 à 15,0%.

Avantageusement la proportion molaire de 10T est comprise de 55,0 à 65,0%, notamment de 55,0 à 60,0%, plus préférentiellement de 60,0 à 65,0%.

Avantageusement, la proportion molaire de 6T est comprise de 15,0 à 60,0%, plus préférentiellement de 20,0 à 45,0%, encore plus préférentiellement de 20,0 à 30,0%, en particulier de 15,0 à 25,0%.

Avantageusement, la proportion molaire de Z est comprise de 5,0 à 20,0% et la proportion molaire de 10T est comprise de 55,0 à 65,0% et la proportion molaire de 6T est comprise de 15,0 à 60,0%.

Avantageusement, la proportion molaire de Z est comprise de 5,0 à 20,0% est comprise de 5,0 à 20,0% et la proportion molaire de 10T est comprise de 55,0 à 65,0% et la proportion molaire de 6T est comprise de 20,0 à 45,0%.

Avantageusement, la proportion molaire de Z est comprise de 5,0 à 20,0% et la proportion molaire de 10T est comprise de 55,0 à 65,0% et la proportion molaire de 6T est comprise de 20,0 à 30,0%.

Avantageusement, la proportion molaire de Z est comprise de 5,0 à 20,0% et la proportion molaire de 10T est comprise de 55,0 à 65,0% et la proportion molaire de 6T est comprise de 15,0 à 25,0%.

Avantageusement, la proportion molaire de Z est comprise de 5,0 à 20,0% et la proportion molaire de 10T est comprise de 55,0 à 60,0% et la proportion molaire de 6T est comprise de 15,0 à 60,0%.

Avantageusement, la proportion molaire de Z est comprise de 5,0 à 20,0% et la proportion molaire de 10T est comprise de 55,0 à 60,0% et la proportion molaire de 6T est comprise de 20,0 à 45,0%.

Avantageusement, la proportion molaire de Z est comprise de 5,0 à 20,0% et la proportion molaire de 10T est comprise de 55,0 à 60,0% et la proportion molaire de 6T est comprise de 20,0 à 30,0%.

Avantageusement, la proportion molaire de Z est comprise de 5,0 à 20,0% et la proportion molaire de 10T est comprise de 55,0 à 60,0% et la proportion molaire de 6T est comprise de 15,0 à 25,0%.

Avantageusement, la proportion molaire de Z est comprise de 5,0 à 20,0% et la proportion molaire de 10T est comprise de 60,0 à 65,0% et la proportion molaire de 6T est comprise de 15,0 à 60,0%.

Avantageusement, la proportion molaire de Z est comprise de 5,0 à 20,0% et la proportion molaire de 10T est comprise de 60,0 à 65,0% et la proportion molaire de 6T est comprise de 20,0 à 45,0%.

Avantageusement, la proportion molaire de Z est comprise de 5,0 à 20,0% et la proportion molaire de 10T est comprise de 60,0 à 65,0% et la proportion molaire de 6T est comprise de 20,0 à 30,0%.

Avantageusement, la proportion molaire de Z est comprise de 5,0 à 20,0% et la proportion molaire de 10T est comprise de 60,0 à 65,0% et la proportion molaire de 6T est comprise de 15,0 à 25,0%.

Avantageusement, la proportion molaire de Z est comprise de 9,0 à 20,0% et la proportion molaire de 10T est comprise de 55,0 à 65,0% et la proportion molaire de 6T est comprise de 15,0 à 60,0%.

Avantageusement, la proportion molaire de Z est comprise de 9,0 à 20,0% et la proportion molaire de 10T est comprise de 55,0 à 65,0% et la proportion molaire de 6T est comprise de 20,0 à 45,0%.

Avantageusement, la proportion molaire de Z est comprise de 9,0 à 20,0% et la proportion molaire de 10T est comprise de 55,0 à 65,0% et la proportion molaire de 6T est comprise de 20,0 à 30,0%.

Avantageusement, la proportion molaire de Z est comprise de 9,0 à 20,0% et la proportion molaire de 10T est comprise de 55,0 à 65,0% et la proportion molaire de 6T est comprise de 15,0 à 25,0%.

Avantageusement, la proportion molaire de Z est comprise de 9,0 à 20,0% et la proportion molaire de 10T est comprise de 55,0 à 60,0% et la proportion molaire de 6T est comprise de 15,0 à 60,0%.

Avantageusement, la proportion molaire de Z est comprise de 9,0 à 20,0% et la proportion molaire de 10T est comprise de 55,0 à 60,0% et la proportion molaire de 6T est comprise de 20,0 à 45,0%.

Avantageusement, la proportion molaire de Z est comprise de 9,0 à 20,0% et la proportion molaire de 10T est comprise de 55,0 à 60,0% et la proportion molaire de 6T est comprise de 20,0 à 30,0%.

Avantageusement, la proportion molaire de Z est comprise de 9,0 à 20,0% et la proportion molaire de 10T est comprise de 55,0 à 60,0% et la proportion molaire de 6T est comprise de 15,0 à 25,0%.

Avantageusement, la proportion molaire de Z est comprise de 9,0 à 20,0% et la proportion molaire de 10T est comprise de 60,0 à 65,0% et la proportion molaire de 6T est comprise de 15,0 à 60,0%.

Avantageusement, la proportion molaire de Z est comprise de 9,0 à 20,0% et la proportion molaire de 10T est comprise de 60,0 à 65,0% et la proportion molaire de 6T est comprise de 20,0 à 45,0%.

Avantageusement, la proportion molaire de Z est comprise de 9,0 à 20,0% et la proportion molaire de 10T est comprise de 60,0 à 65,0% et la proportion molaire de 6T est comprise de 20,0 à 30,0%.

Avantageusement, la proportion molaire de Z est comprise de 9,0 à 20,0% et la proportion molaire de 10T est comprise de 60,0 à 65,0% et la proportion molaire de 6T est comprise de 15,0 à 25,0%.

Avantageusement, la proportion molaire de Z est comprise de 10,0 à 20,0% et la proportion molaire de 10T est comprise de 55,0 à 65,0% et la proportion molaire de 6T est comprise de 15,0 à 60,0%.

Avantageusement, la proportion molaire de Z est comprise de 10,0 à 20,0% et la proportion molaire de 10T est comprise de 55,0 à 65,0% et la proportion molaire de 6T est comprise de 20,0 à 45,0%.

Avantageusement, la proportion molaire de Z est comprise de 10,0 à 20,0% et la proportion molaire de 10T est comprise de 55,0 à 65,0% et la proportion molaire de 6T est comprise de 20,0 à 30,0%.

Avantageusement, la proportion molaire de Z est comprise de 10,0 à 20,0% et la proportion molaire de 10T est comprise de 55,0 à 65,0% et la proportion molaire de 6T est comprise de 15,0 à 25,0%.

Avantageusement, la proportion molaire de Z est comprise de 10,0 à 20,0% et la proportion molaire de 10T est comprise de 55,0 à 60,0% et la proportion molaire de 6T est comprise de 15,0 à 60,0%.

Avantageusement, la proportion molaire de Z est comprise de 10,0 à 20,0% et la proportion molaire de 10T est comprise de 55,0 à 60,0% et la proportion molaire de 6T est comprise de 20,0 à 45,0%.

Avantageusement, la proportion molaire de Z est comprise de 10,0 à 20,0% et la proportion molaire de 10T est comprise de 55,0 à 60,0% et la proportion molaire de 6T est comprise de 20,0 à 30,0%.

Avantageusement, la proportion molaire de Z est comprise de 10,0 à 20,0% et la proportion molaire de 10T est comprise de 55,0 à 60,0% et la proportion molaire de 6T est comprise de 15,0 à 25,0%.

Avantageusement, la proportion molaire de Z est comprise de 10,0 à 20,0% et la proportion molaire de 10T est comprise de 60,0 à 65,0% et la proportion molaire de 6T est comprise de 15,0 à 60,0%.

Avantageusement, la proportion molaire de Z est comprise de 10,0 à 20,0% et la proportion molaire de 10T est comprise de 60,0 à 65,0% et la proportion molaire de 6T est comprise de 20,0 à 45,0%.

Avantageusement, la proportion molaire de Z est comprise de 10,0 à 20,0% et la proportion molaire de 10T est comprise de 60,0 à 65,0% et la proportion molaire de 6T est comprise de 20,0 à 30,0%.

Avantageusement, la proportion molaire de Z est comprise de 10,0 à 20,0% et la proportion molaire de 10T est comprise de 60,0 à 65,0% et la proportion molaire de 6T est comprise de 15,0 à 25,0%.

Avantageusement, la proportion molaire de Z est comprise de 8,0 à 15,0% et la proportion molaire de 10T est comprise de 55,0 à 65,0% et la proportion molaire de 6T est comprise de 15,0 à 60,0%.

Avantageusement, la proportion molaire de Z est comprise de 8,0 à 15,0% et la proportion molaire de 10T est comprise de 55,0 à 65,0% et la proportion molaire de 6T est comprise de 20,0 à 45,0%.

Avantageusement, la proportion molaire de Z est comprise de 8,0 à 15,0% et la proportion molaire de 10T est comprise de 55,0 à 65,0% et la proportion molaire de 6T est comprise de 20,0 à 30,0%.

Avantageusement, la proportion molaire de Z est comprise de 8,0 à 15,0% et la proportion molaire de 10T est comprise de 55,0 à 65,0% et la proportion molaire de 6T est comprise de 15,0 à 25,0%.

Avantageusement, la proportion molaire de Z est comprise de 8,0 à 15,0% et la proportion molaire de 10T est comprise de 55,0 à 60,0% et la proportion molaire de 6T est comprise de 15,0 à 60,0%.

Avantageusement, la proportion molaire de Z est comprise de 8,0 à 15,0% et la proportion molaire de 10T est comprise de 55,0 à 60,0% et la proportion molaire de 6T est comprise de 20,0 à 45,0%.

Avantageusement, la proportion molaire de Z est comprise de 8,0 à 15,0% et la proportion molaire de 10T est comprise de 55,0 à 60,0% et la proportion molaire de 6T est comprise de 20,0 à 30,0%.

Avantageusement, la proportion molaire de Z est comprise de 8,0 à 15,0% et la proportion molaire de 10T est comprise de 55,0 à 60,0% et la proportion molaire de 6T est comprise de 15,0 à 25,0%.

Avantageusement, la proportion molaire de Z est comprise de 8,0 à 15,0% et la proportion molaire de 10T est comprise de 60,0 à 65,0% et la proportion molaire de 6T est comprise de 15,0 à 60,0%.

Avantageusement, la proportion molaire de Z est comprise de 8,0 à 15,0% et la proportion molaire de 10T est comprise de 60,0 à 65,0% et la proportion molaire de 6T est comprise de 20,0 à 45,0%.

Avantageusement, la proportion molaire de Z est comprise de 8,0 à 15,0% et la proportion molaire de 10T est comprise de 60,0 à 65,0% et la proportion molaire de 6T est comprise de 20,0 à 30,0%.

Avantageusement, la proportion molaire de Z est comprise de 8,0 à 15,0% et la proportion molaire de 10T est comprise de 60,0 à 65,0% et la proportion molaire de 6T est comprise de 15,0 à 25,0%.

Avantageusement, Z correspond à un motif amide résultant de la condensation d'un amino acide en C₁₁.

Avantageusement, le polymère polyamide de l'invention est le 11/10T/6T dans lequel la proportion de motif 11 est comprise de 5,0 à 20,0%, notamment de 9,0 à 20,0%, en particulier de 10,0 à 20,0%, plus préférentiellement de 8,0 à 15,0% et la proportion de 10T est comprise de 55,0 à 65,0%, notamment de 55,0 à 60,0%, plus préférentiellement de 60,0 à 65,0% et la proportion de 6T est comprise de 15,0 à 60,0%, plus préférentiellement de 20,0 à 45,0%, encore plus préférentiellement de 20,0 à 30,0%, en particulier de 15,0 à 25,0%.

En ce qui concerne la réactivité ou non de ladite composition de polyamide, selon une première option, ladite composition de polyamide peut être une composition non réactive selon b). Cela signifie que ladite composition est la même que celle du polymère (polyamide) de matrice dudit composite car il y a absence de réaction dans cette composition, laquelle reste stable et non évolutive en terme de masse moléculaire lors de son chauffage pour la mise en oeuvre du matériau composite de l'invention. Les caractéristiques du polymère polyamide dans cette composition sont les mêmes, avec Tf comme définie déjà ci-haut, que celles du polymère final qui est le polyamide semi-cristallin obtenu par une composition réactive a) (voir ci-dessous), ledit polymère constituant par définition ladite matrice thermoplastique dudit composite. Les polyamides selon b) sont obtenus par réaction classique de polycondensation à partir des composants monomères qui sont des aminoacides ou lactames, l'héxaméthylène diamine, la décane diamine et l'acide tétéphtalique, avec la proportion et nature des monomères étant choisies en fonction des proportions désirées dans le polymère de matrice de la composition de l'invention.

La masse moléculaire moyenne en nombre Mn dudit polymère (polyamide) final de la matrice thermoplastique dudit composite est de préférence dans une plage allant de 10000 à 40000, de préférence de 12000 à 30000. Ces valeurs Mn peuvent correspondre à des viscosités inhérentes supérieures ou égales à 0,8. Ces polyamides selon la composition b) sont non réactifs, soit par le faible taux de fonctions (résiduelles) réactives présentes, en particulier avec un taux desdites fonctions < 120 meq/kg, soit par la présence du même type de fonctions terminales en bout de chaîne et donc non réactives entre elles, soit par la modification et blocage desdites fonctions réactives par un composant réactif monofonctionnel, par exemple pour les fonctions amines par réaction de modification avec un monoacide ou un monoisocyanate et pour des fonctions carboxy par réaction avec une monoamine. Quand ledit polymère final de matrice est issu d'un prépolymère réactif dans une composition précurseur réactive a), ce prépolymère réactif a une Mn d'au moins deux fois inférieure à celle dudit polymère final de matrice.

Selon une deuxième option, ladite composition de polyamide peut être une composition réactive de prépolymère selon a) et précurseur ou composition précurseur dudit polymère polyamide de ladite matrice du composite.

Dans cette deuxième option, selon la composition réactive a), on peut distinguer trois possibilités plus particulières. Selon une première possibilité, ladite composition a) peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, avec X' et Y' étant amine et carboxy ou carboxy et amine respectivement. Selon une deuxième possibilité, ladite composition réactive a) peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement. Cette réaction de condensation (ou de polycondensation) peut provoquer l'élimination de sous-produits. Ceux-ci peuvent être éliminés en travaillant de préférence selon un procédé utilisant une technologie de moule ouvert. Dans le cas d'un procédé en moule fermé, une étape de dégazage, de préférence sous vide, des sous-produits éliminés par la réaction est présente, ceci afin d'éviter la formation de microbulles des sous-produits dans le matériau composite final, qui (microbulles) peuvent affecter les performances mécaniques dudit matériau si elles ne sont pas éliminées ainsi. Selon une troisième option de composition réactive a), ladite composition a) ou composition précurseur a) peut comprendre ou être constituée de :
a1) au moins un prépolymère dudit polymère polyamide thermoplastique (de la matrice) comme déjà défini ci-haut avec ce prépolymère porteur de n fonctions réactives terminales X₁, identiques choisies parmi : -NH₂ (aminé), -CO₂H (carboxy) et -OH (hydroxyle), de préférence -NH₂ (aminé) et -CO₂H (carboxy), avec n étant 1 à 3, de préférence de 1 à 2, plus préférentiellement 1 ou 2, plus particulièrement 2
a2) au moins un allongeur de chaîne Y₁-A'-Y₁, avec A' étant un biradical hydrocarboné de structure non polymérique (ni polymère ni oligomère ni prépolymère), porteur de 2 fonctions réactives terminales Y₁ identiques, réactives par polyaddition (sans élimination de sous-produit de réaction), avec au moins une fonction X₁ dudit prépolymère a1), de préférence de masse moléculaire inférieure à 500 et plus préférentiellement inférieure à 400,
en particulier Y₁ est choisi parmi: oxazine, oxazoline, oxazolinone, oxazinone, imidazoline, époxy, isocyanate, maléimide, anhydride cyclique, notamment parmi: oxazine, oxazoline, oxazolinone, oxazinone, imidazoline, époxy, maléimide, anhydride cyclique.

NH₂ (aminé) signifie amine primaire et secondaire.

Dans ce dernier cas (troisième option), la structure semi-cristalline dudit polymère polyamide de la matrice dudit composite est essentiellement apportée par la structure dudit prépolymère a1) qui est également semi-cristallin.

Comme exemples convenables d'allongeurs a2) en fonction des fonctions X1 portées par ledit prépolymère polyamide semi-cristallin a1), on peut citer les suivants :
- lorsque X₁ est NH₂ ou OH de préférence NH₂ :
   ∘ soit l'allongeur de chaîne Y₁-A'-Y₁ correspond à
      ▪ Y₁ choisi parmi les groupements : maléimide, isocyanate éventuellement bloqué, oxazinone et oxazolinone, anhydride cyclique, de préférence oxazinone et oxazolinone, en particulier parmi maléimide, oxazinone et oxazolinone, anhydride cyclique, de préférence oxazinone et oxazolinone
         et
      ▪ A' est un espaceur carboné ou radical carboné portant les fonctions ou groupements réactifs Y₁, choisi parmi :
         - une liaison covalente entre deux fonctions (groupements) Y₁ dans le cas où Y₁ = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 200 g.mol⁻¹
   ∘ soit l'allongeur de chaîne Y₁-A'-Y₁ correspond à Y₁ étant un groupement caprolactame et à A' pouvant être un radical carbonyle tel que le carbonyl biscaprolactame ou à A' pouvant être un téréphtaloyle ou un isophtaloyle,
   ∘ soit ledit allongeur de chaîne Y₁-A'-Y₁ porte un groupement Y₁ d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
   et
- lorsque X₁ est COOH :
   ∘ ledit allongeur de chaîne Y₁-A'-Y₁ correspond à :
      ▪ Y₁ choisi parmi les groupements : oxazoline, oxazine, imidazoline, aziridine, comme le 1,1'-iso- ou téré- phtaloyl-bis(2-methyl aziridine) ou époxy.
      ▪ A' étant un espaceur (radical) carboné tel que défini ci-dessus.

Plus particulièrement, quand dans ledit allongeur Y₁-A'-Y₁, ladite fonction Y₁ est choisie parmi oxazinone, oxazolinone, oxazine, oxazoline ou imidazoline, dans ce cas, dans l'allongeur de chaîne représenté par Y₁-A'-Y₁, A' peut représenter un alkylène tel que -(CH₂)ₘ-avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y₁ est un époxy, l'allongeur de chaîne peut être choisi parmi : les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines_(diènes) époxydées ou acides gras à double insaturation éthylénique époxydée, le diglycidyl 1,2-cyclohexanedicarboxylate ; et leurs mélanges.

Avantageusement, X₁ est NH₂ ou OH, en particulier NH₂ et Y₁ est choisi parmi une oxazinone et une oxazolinone.

Avantageusement, X₁ est CO₂H et Y₁ est choisi parmi un epoxy et une oxazoline.

Avantageusement, X₁ est CO₂H et Y₁-A'-Y₁ est choisi parmi les phénylènes bis oxazolines, de préférence la 1,3 - phénylène-bis(2-oxazoline) ou la 1,4-phénylène-bis(2-oxazoline) (PBO).

Dans le cas du carbonyl- ou térephtaloyl- ou isophtaloyl- biscaprolactame comme allongeur de chaîne Y₁-A'-Y₁, les conditions préférées évitent l'élimination de sous-produit, comme le caprolactame lors de ladite polymérisation et mise en oeuvre à l'état fondu.

Dans le cas éventuel cité ci-haut où Y₁ représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X)n où X₁ = NH₂, les conditions préférées évitent toute formation de cycle imide lors de la polymérisation et lors la mise en oeuvre à l'état fondu.

Pour X₁ = OH ou NH₂, le groupement Y₁ est choisi de préférence parmi : isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y₁ oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leusr modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y₁ imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y₁ = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y₁ oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone.

A' peut être également un alkylène en C₁ à C₁₄, de préférence en C₂ à C₁₀ mais de préférence A' est un arylène et plus particulièrement il peut être un phénylène (substitué par Y₁ en positions 1,2 ou 1,3 ou 1,4) ou un radical naphtalène (disubstitué par Y₁) ou un phtaloyle (iso- ou téréphtaloyle) ou A' peut être un cycloalkylène.

Pour les fonctions Y₁ comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y₁ en positions 1,2 ou 1,3 ou 1,4) ou un radical naphtalène (disubstitué par Y₁) ou un phtaloyle (iso- ou téréphtaloyle) ou A' peut être un cycloalkylène.

Dans le cas où Y₁ = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1,1' isophtaloyl-bis(2-méthyl aziridine).

La présence d'un catalyseur de la réaction entre ledit prépolymère P(X)n et ledit allongeur Y₁-A'-Y₁ à un taux allant de 0,001 à 2,0%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure à 500, plus préférentiellement inférieure à 400.

Lesdits prépolymères réactifs de ladite composition réactive a), selon les trois options citées plus haut, ont une masse moléculaire moyenne en nombre Mn allant de 500 à 10000, de préférence de 1000 à 6000, en particulier de 2500 à 6000. Les Mn sont déterminées en particulier par le calcul à partir du taux des fonctions terminales déterminé par titration potentiométrique en solution et la fonctionnalité desdits prépolymères. Les masses Mn peuvent également déterminées par chromatographie d'exclusion stérique ou par RMN.

Le taux dedit allongeur dans le dit polymère issu de la composition réactive a) varie de 1 à 20%, en particulier de 5 à 20%.

Dans le cas des compositions réactives de l'invention selon définition a), lesdits prépolymères réactifs sont préparés par réaction classique de polycondensation entre les composants diamines et diacides correspondants et éventuellement (en fonction du motif D) aminoacides ou lactames en respectant la nature et proportions des motifs A et B et éventuellement C et D selon l'invention. Les prépolymères portant des fonctions X' et Y' amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxy, avec un taux molaire global en fonctions acides égal à celui des fonctions amines X' de départ.

Pour l'obtention de prépolymères fonctionnalisés avec des fonctions identiques (aminés ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Dans le cas d'un prépolymère P(X)n avec n fonctions X₁ identiques, la fonctionnalité 1 peut être obtenue en présence d'un composant monofonctionnel bloquant (monoacide ou monoamine en fonction de la nature de X₁ = amine ou carboxy).

Une fonctionnalité n = 2 peut être obtenue à partir de composants difonctionnels : diamines et diacides avec excès de l'un pour fixer X₁ en fonction de cet excès.

Pour n = 3 par exemple, pour un prépolymère P(X)n, il faut la présence d'un composant trifonctionnel, par exemple présence d'une triamine (une mole par chaîne de prépolymère) avec une diamine dans la réaction avec un diacide. La fonctionnalité préférée pour P(X)n est n = 2.

Les fibres de renfort ou renfort fibreux peuvent être un assemblage de fibres, de préférence de fibres longues, c'est-à-dire ayant un facteur de forme défini par le ratio de longueur sur diamètre de la fibre, ce qui signifie que ces fibres ont une section circulaire, supérieur à 1000, de préférence supérieur à 2000. Les fibres de renfort utilisées peuvent également être non circulaires ou un mélange de fibres circulaires et non circulaires. Dans cet assemblage, les fibres peuvent être continues, sous forme de renfort unidirectionnel (UD) ou multidirectionnel (2D, 3D). En particulier, elles peuvent être sous forme de tissus, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures à la température de fusion Tf dudit polyamide semi-cristallin de l'invention et supérieures à la température de polymérisation et/ou de mise en oeuvre.
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide semi-cristallin constituant ladite matrice du composite et supérieure à la température de mise en oeuvre
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al₂O₃) ; les fibres métallisées comme les fibres de verre métallisées et les fibres de carbone métallisées ou les mélanges des fibres précitées.

Plus particulièrement, ces fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   ▪ les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
   ▪ les fibres de polymères thermoplastiques et plus particulièrement choisies parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
   ▪ les fibres de polyamides répondant à l'une des formules : 6, 11, 12, 6.10, 6.12, 6.6, 4.6,
   ▪ les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
   ▪ les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort préférées sont des fibres longues (à section circulaire) choisies parmi les : fibres de carbone, y compris métallisées, fibres de verre, y compris métallisées de type E, R, S2, fibres d'aramides (comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar®) ou leurs mélanges. Ces fibres ont une section circulaire, en particulier des fibres de verre.

Lesdites fibres peuvent représenter des taux de 30,0 à 85,0% en poids, de préférence de 50 à 80% en poids dudit matériau composite, en particulier de 50,0 à 75,0% en poids, notamment de 50,0 à 70,0% en poids dudit matériau composite, en particulier 50% en poids dudit matériau composite.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 200 à 700g/m². Les fibres peuvent être sous forme tissée ou non tissée, en particulier sous forme de tissus et d'étoffes de renfort. Elles peuvent en particulier être assemblées et liées sous forme de préforme ayant déjà la forme de la pièce finale. Comme liant convenable, on peut utiliser une composition selon a) ou b) et à défaut un liant compatible avec celle-ci (composition a) ou b)).

La composition selon l'invention comprend un renfort fibreux à base de fibres, de préférence longues, en particulier avec L/D supérieur à 1000, de préférence supérieur à 2000 et plus particulièrement sélectionnées parmi les fibres de verre, de carbone, de céramique, d'aramide ou leurs mélanges.

Plus particulièrement, la composition selon l'invention est une composition de moulage. Comme telle, elle peut comprendre, en plus des fibres de renfort de préférence longues, d'autres charges et additifs.

Parmi les charges convenables, on peut citer par exemple : les charges minérales ou organiques : le noir de carbone, nanotubes de carbone (NTC), nanofibrilles de carbone, billes de verre, polymères recyclés broyés à l'état de poudre, du carbonate de calcium.

Lesdites fibres et charges peuvent représenter des taux de 20,0 à 85,0% en poids, de préférence de 30,0 à 85,0% en poids, plus préférentiellement de 50,0 à 80,0% en poids dudit matériau composite, notamment de 50,0 à 70,0% en poids dudit matériau composite, en particulier 50,0% en poids dudit matériau composite, indépendamment de la proportion respective de fibres et de charges.

Parmi les additifs convenables, on peut citer : des additifs absorbant dans l'UV ou IR de façon à permettre le soudage du composite obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du composite obtenu.

La composition de l'invention peut également comprendre un modifiant choc.

Des exemples de modifiant choc, sans être limité à ceux-ci sont les suivants :
du caoutchouc, du polybutadiène, du polyisoprène, du polyisobutylène, un copolymère de butadiène et/ou d'isoprène avec du styrène ou des dérivés du styrène et d'autres comonomères, un copolymère hydrogéné, et/ou un copolymère produit par greffage ou copolymérisation avec des anhydrides, de l'acide (meth)acrylique, ou un ester de ceux-ci. Le modifiant choc peut aussi être un caoutchouc greffé avec un squelette élastomère réticulé qui est composé de butadiène, d'isoprène, ou d'acrylates d'alkyle, et greffé avec du polystyrene, ou peut être un homo- ou copolymère d'oléfine non-polaire ou polaire, tel que de l'éthylène-propylène, de l'éthylene-propylène-diène, ou de l'éthylène-octène, ou de l'éthylene-vinyl acétate, ou un homo- ou copolymère d'oléfine non-polaire ou polaire produit par greffage ou copolymérisation avec des anhydrides, de l'acide (meth)acrylique, ou un ester de ceux-ci. Le modifiant choc peut aussi être un copolymère d'acide carboxylique fonctionnalisé, tel que du poly (acide éthène-co-(meth)acrylique) ou du poly (acide(éthène-co-1-oléfine-co-(meth)acrylique), dans lequel la 1-oléfine est un alcène or un ester insaturé d'acide (meth)acrylique ayant plus de 4 atomes, y compris les copolymères dans lesquels les groupes acides ont été neutralisés par des ions métalliques.

Le modifiant choc peut être présent dans la composition jusqu'à 30,0% en poids, préférentiellement de plus de 5,0% à 20,0% en poids.

Avantageusement, X₁ est CO₂H et Y₁ est choisi parmi un epoxy et une oxazoline.

Le deuxième objet de l'invention concerne un procédé de fabrication d'un matériau composite thermoplastique, en particulier d'une pièce mécanique ou d'une pièce de structure à base dudit matériau, de composition telle que définie selon l'invention comme exposée ci-haut, lequel procédé comprend, au moins une étape de polymérisation d'au moins une composition réactive a) telle que définie ci-haut selon l'invention ou une étape de moulage ou de mise en oeuvre d'au moins une composition non réactive b) telle que définie ci-haut selon l'invention.

Plus particulièrement, ledit procédé peut comprendre les étapes suivantes :
i) imprégnation à l'état fondu d'un renfort fibreux par une composition telle que définie ci-haut selon l'invention mais ne comprenant pas ledit renfort fibreux dans un moule ouvert ou fermé ou hors moule, afin d'obtenir une composition telle que définie selon l'invention, c'est-à-dire avec renfort fibreux imprégné,
ii) réaction de polymérisation par chauffage de ladite composition de l'étape i), dans le cas d'une composition réactive a) de polyamide comme définie selon l'invention, avec allongement de chaîne (augmentation de masse moléculaire), suivant le cas, par réaction de polycondensation (y compris autocondensation d'un même prépolymère), soit par réaction de polyaddition en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule
iii) mise en en oeuvre ou moulage de ladite composition de l'étape i), dans le cas d'une composition de polyamide non réactive b) comme définie selon l'invention, pour former la pièce composite finale dans un moule ou avec un autre système de mise en oeuvre et dans le cas d'une composition réactive a) une étape de mise en oeuvre par moulage ou par un autre système de mise en oeuvre et simultanément avec l'étape ii) de polymérisation.

Dans ledit procédé selon l'invention, ladite mise en oeuvre peut être réalisée de préférence selon un procédé RTM, S-RIM, injection-compression, pultrusion ou par infusion, en particulier dans le cas d'une composition réactive a).

Dans ledit procédé selon l'invention, ladite mise en oeuvre est réalisée par thermocompression de préimprégnés sous pression réduite.

Un autre objet de l'invention concerne l'utilisation d'une composition telle que définie ci-haut selon l'invention ou l'utilisation d'un polymère polyamide semi-cristallin selon l'invention pour la fabrication d'un matériau composite thermoplastique, plus particulièrement d'une pièce mécanique ou d'une pièce de structure (incluant pièce structurale et semi-structurale) à base de ladite composition ou dudit matériau composite.

Selon une utilisation plus particulière, lesdites pièces mécaniques ou pièces de structure dudit matériau composite concernent des applications dans le domaine de l'automobile, électrique ou l'électronique, ferroviaire, marin, de l'éolien, photovoltaïque, solaire, y compris panneaux solaires et composants de centrales solaires, du sport, aéronautique et spatial, transport routier (concernant les camions), du bâtiment, génie civil, des panneaux ou des loisirs.

Avantageusement, lesdites pièces pour des applications dans l'automobile sont des pièces sous capot moteur pour le transport de fluide, notamment dans des dispositifs d'admission d'air, de refroidissement (par exemple par air, liquide de refroidissement,...), de transport ou transfert de carburants ou de fluides (tels que huile, eau,...).

Avantageusement, lesdites pièces mécaniques ou de structure pour des applications dans l'électrique ou l'électronique sont biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias. Ces éléments de biens d'équipements électriques et électroniques couvrent non seulement les parties structurelles de tels biens (boîtiers, coques...) mais également leurs éventuels accessoires associés (écouteurs, éléments de connectique, câbles...).

Plus particulièrement, on peut distinguer trois applications plus préférées en fonction de la température d'utilisation desdites pièces en matériau composite selon l'invention :
- dans l'éolien, avec une Tg dudit polyamide matrice thermoplastique d'au moins 80°C, de préférence d'au moins 90°C
- dans l'automobile, avec une Tg dudit polyamide d'au moins 100°C
- dans l'aéronautique, avec une Tg dudit polyamide d'au moins 120°C.

Cela signifie que pour une Tg d'au moins 100°C, il peut avoir deux applications possibles : automobile et éolien et si la Tg est d'au moins 120°C en plus de l'aéronautique comme application, on peut également avoir l'éolien et l'automobile.

La présente invention couvre également un matériau composite thermoplastique résultant de l'utilisation d'au moins une composition pour matériau composite thermoplastique telle que définie ci-haut selon la présente invention.

En dernier, l'invention concerne une pièce mécanique ou une pièce de structure de matériau composite thermoplastique, laquelle résulte de l'utilisation d'au moins une composition de l'invention comme définie ci-haut ou de l'utilisation d'un polymère polyamide semi-cristallin tel que défini selon l'invention ou d'un matériau composite thermoplastique tel que défini ci-avant ou laquelle pièce est obtenue par un procédé tel que défini ci-haut selon l'invention.

Plus particulièrement, ladite pièce de structure est une pièce automobile post-traitée par cataphorèse, en particulier avec une Tg d'au moins 100°C.

Selon une autre option, elle est une pièce pour éolienne, en particulier avec une Tg d'au moins 80 et de préférence 90°C.

Selon une troisième option particulière, elle est une pièce pour l'aéronautique, en particulier avec une Tg d'au moins 120°C.

### Méthodes de détermination des caractéristiques citées

- La température de fusion Tf et la température de cristallisation Tc sont mesurées par DSC, après un cycle première chauffe/refroidissement/seconde chauffe, selon la norme ISO 11357-3:2013. La vitesse de chauffage et de refroidissement est de 20°C/min.
- La température de transition vitreuse Tg des polymères thermoplastiques utilisés est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La HDT (température de fléchissement sous charge) a été déterminée selon la norme ISO 75 f (barreaux posés à plat) méthode A (charge 1.8 MPa), rampe de température de chauffe 50°C.h⁻¹ des PA HTg chargés 50% avec des fibres de verre (FV) à une température matière de 290°C) :
- La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de monomères bifonctionnels seuls.
- La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.
- La mesure de la viscosité intrinsèque ou inhérente est réalisée dans le m-crésol. La méthode est bien connue de l'homme du métier. On suit la norme ISO 307:2007 mais en changeant le solvant (utilisation du m-crésol à la place de l'acide sulfurique et la température étant de 20°C).
- L'enthalpie de cristallisation dudit polymère de matrice est mesurée en Calorimétrie Différentielle à Balayage (DSC) selon la norme ISO 11357-3 :2013.

### Exemples

### A - Préparation d'un polymère polyamide par voie directe (sans allongement de chaîne d'un prépolymère réactif)

Dans un réacteur autoclave de 14 litres, on introduit 5 kg des matières premières suivantes :
- 500 g d'eau,
- L'héxaméthylène diamine et la décane diamine,
- l'aminoacide ou le lactame,
- l'acide téréphtalique,
- le régulateur de chaîne monofonctionnel : acide benzoïque en quantité adaptée à la Mn visée et variant (acide benzoïque) de 40 à 100g,
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau 1 ci-dessous.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

La polymérisation est ensuite poursuivie sous balayage d'azote de 20 l/h jusqu'à obtention de la masse Mn visée indiquée au tableau de caractéristiques.

Le polymère est ensuite vidangé par la vanne de fond puis refroidi dans un bac d'eau puis mis sous forme de granulés.

Les résultats sont présentés dans le tableau 1 suivant.

**Tableau 1 : Caractéristiques des polymères préparés par voie directe sans prépolymère réactif**

| Réf | Type essai | Structure moléculaire / Composition molaire | Tf (°C) | HDT A (°C) Avec FV = 50% |
|---|---|---|---|---|
| 1 | Comparatif, (EP1 988 113) | 10.T/6.T (50.1/49.9) | 295 (IE2) | 274 (IE11) |
| 2 | Invention | 10.T/6.T/11 (61/24,4/14,6) | 269 | 218 |

| | | | | |
|---|---|---|---|---|
| Fv = Fibre de verre (% en poids) | | | | |

L'essai représentatif 2 de l'invention montrent une HDT A très inférieure à celle décrite pour le 6T/10T (50.1/49.9) du brevet EP 1 988 113 (IE 11) et notamment très inférieure à 260°C, ainsi qu'un point de fusion inférieur à 270°C (IE2).

Dans toute la description ,la Tg est déterminée selon la norme 11357-2 :2013 et les Tf, Tc et ΔH selon la norme 11357-3 :2013.

### B - Préparation d'un polymère polyamide par allongement de chaîne d'un prépolymère (ou oligomère) réactif

### B-1 Préparation du prépolymère réactif P(X)n

Dans un réacteur autoclave de 14 litres, on introduit 5 kg des matières premières suivantes :
- 500 g d'eau,
- L'héxaméthylène diamine et la décanediamine,
- l'aminoacide,
- l'acide téréphtalique,
- 35 g d'hypophosphite de sodium en solution,
- 0,1 g d'un antimousse WACKER AK1000 (société Wacker Silicones).

La nature et rapports molaires des motifs et structures moléculaires des polyamides prépolymères réactifs (par essai référencé) sont donnés au tableau 2 ci-dessous.

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

L'oligomère (prépolymère) est ensuite vidangé par la vanne de fond puis refroidi dans un bac d'eau puis broyé.

Les caractéristiques sont présentées au tableau 2 suivant.

**Tableau 2 : Caractéristiques des prépolymères préparés**

| Réf | | Structure moléculaire et composition molaire | Tf (°C) | Mn g/mole (déterminée par RMN) |
|---|---|---|---|---|
| 3 | Selon l'invention | 10.T/6.T/11 (63,6/27,3/9,1) | 265 | 2635* |
| 4 | Selon l'invention | 10.T/6.T/11 (63,6/27,3/9,1) | 266 | 7117* |
| 5 | Selon l'invention | 10.T/6.T/11 (63,6/27,3/9,1) | 268 | 2701** |
| 6 | Selon l'invention | 10.T/6.T/11 (60/24/16) | 267 | 4545* |
| 7 | Selon l'invention | 10.T/6.T/11 (60/24/16) | 266 | 8333* |
| 8 | Selon l'invention | 10.T/6.T/11 (60/24/16) | 264 | 3407*** |
| 9 | Selon l'invention | 10.T/6.T/11 (60/24/16) | 261 | 2548** |

| | | | | |
|---|---|---|---|---|
| (*) : Prépolymère réactif porteur sur la même chaîne de deux fonctions X' et Y' amine et carboxy ou carboxy et amine telles que définies ci-dessus. (**) : Prépolymère Di COOH porteur sur la même chaîne de deux fonctions X' et Y' = COOH. (***) : Prépolymère Di NH₂ porteur sur la même chaîne de deux fonctions X' et Y' = NH₂. | | | | |

### B-2 Préparation du polymère polyamide par allongement de chaîne avec un allongeur type Y-A-Y

10 g de l'oligomère ci-dessus séché et broyé (dans cet exemple, celui du tableau 2, Réf. 5), sont mélangés avec une quantité stœchiométrique de 1,3-phénylène bis-(2-oxazoline) (PBO). Le mélange est introduit sous balayage d'azote dans une micro-extrudeuse de marque DSM (de volume 15mL) à vis coniques corotatives préchauffée à 280°C sous rotation des vis à 100 tr/mn. Le mélange est laissé sous recirculation dans la micro-extrudeuse et l'augmentation de la viscosité est suivie par mesure de la force normale. Au bout de 2 minutes environ, un palier est atteint et le contenu de la micro-extrudeuse est vidangé sous forme d'un jonc. Le produit refroidi à l'air est mis sous forme de granulés.

Les résultats des analyses des produits sont présentés au tableau 3 ci-dessous.

**Tableau 3 : Caractéristiques analytiques des polyamides obtenus avec allongement de chaîne**

| Réf | | Structure moléculaire / Composition molaire | Tf (°C) | Tg (°C) | Tc (°C) | ΔH (J/g) | Viscosité inhérente (dans m-crésol) | Mn (déterminée par chromatographie d'exclusion stérique) |
|---|---|---|---|---|---|---|---|---|
| 10 | Selon l'invention | 10.T/6.T/11 (63,6/27,3/9,1) | 263 | 114 | 224 | 46 | 1,38 | 12600 |

### C - Formulation composite à fibres courtes

### C-1 Préparation de la formulation

Les granulés issus de l'étape A sont compoundés sur extrudeuse bi-vis Evolum 32 selon un profil de température plat de 280°C. Le débit est de 40 kg/h et la vitesse de 300 tr/mn. Le polymère (49,65% en poids) et les additifs (0.3% de stérarate de Calcium et 0,4% d'Irganox 1010) sont introduits dans la trémie principale. La fibre de verre ASAHI CS 692 FT (49,65% en poids) est introduite via un gaveur latéral en deuxième partie d'extrudeuse. Les joncs sont refroidis dans l'eau et mis sous forme de granulés.

Les résultats des analyses des produits obtenus sont présentés au tableau 4 ci-dessous.

**Tableau 4 : Caractéristiques obtenues des formulations mises en oeuvre**

| Réf | | Composition molaire du polymère | Tf (°C) |
|---|---|---|---|
| 2 | Selon l'invention | 10.T/6.T/11 (61/24,4/14,6) | 269 |

## Revendications

1. Composition pour matériau composite thermoplastique ou composition de matériau composite thermoplastique, ledit matériau composite comprenant des fibres de renfort ou renfort fibreux et une matrice thermoplastique imprégnant lesdites fibres (ou ledit renfort fibreux), matrice à base d'au moins un polymère thermoplastique, ladite composition étant **caractérisée en ce que** ledit polymère thermoplastique de matrice est un polymère polyamide semi-cristallin comprenant des motifs amides Z, 10T et 6T;
- ladite composition comprenant, en plus desdites fibres de renfort:
a) une composition réactive comprenant ou constituée de, au moins un prépolymère (ou oligomère, avec oligomère et prépolymère signifiant la même chose pour la suite) polyamide réactif, ladite composition étant une composition précurseur dudit polymère polyamide de ladite matrice,
ou en alternative à a)
b) une composition non réactive d'au moins un polymère polyamide, y compris le polymère issu de la composition réactive a), ladite composition étant celle de ladite matrice thermoplastique,
et avec :
- ladite composition a) ou b) comprenant ou étant constituée de un ou plusieurs polyamides, y compris copolyamides statistiques ou séquencés qui sont des prépolymères (ou oligomères) selon a) ou qui sont des polymères selon b) et lesquels comprennent des motifs amides Z, 10T et 6T, sélectionnés comme suit :
- Z correspondant à un motif amide résultant :
∘ de la condensation d'au moins un lactame ou d'au moins un amino-acide en C₆-C₁₄,
∘ de la condensation d'une diamine et d'un diacide X.Y, X et Y étant en C₄-C₁₈, en particulier C₁₀-C₁₂,
le taux molaire de Z étant : 0,0<Z≤ 30,0%,
- 10T étant un motif amide majoritaire, résultant de la condensation d'une diamine en C₁₀, en particulier la décanediamine, et de l'acide téréphtalique, présent à un taux molaire allant de 40,0 à 95,0%,
- 6T étant un motif amide résultant de la condensation d'une diamine en C6, en particulier l'hexanediamine, et de l'acide téréphtalique, présent à un taux molaire allant de 5,0 à 60,0%,
et sous la condition que la somme des taux molaires Z + 10T + 6T soit égale à 100%, ladite composition ayant une température de fléchissement sous charge (HDT A) inférieure à 260°C, en particulier comprise de 210°C à moins de 240°C et une température de fusion Tf inférieure ou égale à 270°C, notamment inférieure ou égale à 265°C, en particulier inférieure ou égale à 260°C.

2. Composition selon la revendication 1, **caractérisée en ce que** le polymère polyamide est choisi parmi le 6/10T/6T, le 12/10T/6T ou le 11/10T/6T, en particulier le 11/10T/6T.

3. Composition selon la revendication 1, dans laquelle le polymère polyamide est choisi parmi le 10.10/10T/6T, le 12.10/10T/6T, le 10.12/10T/6T, le 12.12/10T/6T, préférentiellment le 10.10/10T/6T, le 10.12/10T/6T.

4. Composition selon l'une des revendications 1 à 3, **caractérisée en ce que** la proportion molaire du motif Z est comprise de 5,0 à 20,0%, notamment de 9,0 à 20,0%, en particulier de 10,0 à 20,0%, plus préférentiellement de 8,0 à 15,0%.

5. Composition selon l'une des revendications 1 à 4, **caractérisée en ce que** la proportion molaire de 10T est comprise de 55,0 à 65,0%, notamment de 55,0 à 60,0%, plus préférentiellement de 60,0 à 65,0%.

6. Composition selon l'une des revendications 1 à 5, **caractérisée en ce que** la proportion molaire de 6T est comprise de 15,0 à 60,0%, plus préférentiellement de 20,0 à 45,0%, encore plus préférentiellement de 20,0 à 30,0%, en particulier de 15,0 à 25,0%.

7. Composition selon l'une des revendications 1 à 6, **caractérisée en ce que** le polymère polyamide de l'invention est le 11/10T/6T dans lequel la proportion de motif 11 est comprise de 5,0 à 20,0%, notamment de 9,0 à 20,0%, en particulier de 10,0 à 20,0%, plus préférentiellement de 8,0 à 15,0%, la proportion de 10T est comprise de 55,0 à 65,0%, notamment de 55,0 à 60,0%, plus préférentiellement de 60,0 à 65,0%, et la proportion de 6T est comprise de 15,0 à 60,0%, plus préférentiellement de 20,0 à 45,0%, encore plus préférentiellement de 20,0 à 30,0%, en particulier de 15,0 à 25,0%.

8. Composition selon l'une des revendications 1 à 7, **caractérisée en ce que** ladite composition de polyamide est une composition non réactive selon b).

9. Composition selon l'une des revendications 1 à 7, **caractérisée en ce que** ladite composition de polyamide est une composition réactive de prépolymère selon a) et précurseur dudit polymère polyamide de ladite matrice du composite.

10. Composition selon la revendication 9, **caractérisée en ce que** ladite composition a) comprend ou est constituée de, au moins un prépolymère réactif porteur sur la même chaîne de deux fonctions terminales X' et Y', fonctions respectivement coréactives entre elles par condensation, avec X' et Y' étant amine et carboxy ou carboxy et amine respectivement.

11. Composition selon la revendication 9, **caractérisée en ce que** ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

12. Composition selon la revendication 9, **caractérisée en ce que** ladite composition a) ou composition précurseur, comprend ou est constituée de :
a1) au moins un prépolymère dudit polymère polyamide thermoplastique, porteur de n fonctions réactives terminales X₁, choisies parmi : -NH₂, -CO₂H et -OH, de préférence NH₂ et -CO₂H avec n étant 1 à 3, de préférence de 1 à 2, plus préférentiellement 1 ou 2, plus particulièrement 2
a2) au moins un allongeur de chaîne Y₁-A'-Y₁, avec A' étant un biradical hydrocarboné, de structure non polymérique, porteur de 2 fonctions réactives terminales Y identiques, réactives par polyaddition avec au moins une fonction X₁ dudit prépolymère a1), de préférence de masse moléculaire inférieure à 500, plus préférentiellement inférieure à 400.
en particulier Y₁ est choisi parmi: oxazine, oxazoline, oxazolinone, oxazinone, imidazoline, époxy, isocyanate, maléimide et anhydride cyclique, notamment parmi: oxazine, oxazoline, oxazolinone, oxazinone, imidazoline, époxy, maléimide, anhydride cyclique.

13. Composition selon l'une des revendications 9 à 12, **caractérisée en ce que** lesdits prépolymères réactifs de ladite composition a) ont une masse moléculaire moyenne en nombre Mn allant de 500 à 10000, de préférence de 1000 à 6000.

14. Composition selon l'une des revendications 9 à 13, dans laquelle X₁ est NH₂ ou OH, en particulier NH₂ et Y₁ est choisi parmi une oxazinone et une oxazolinone.

15. Composition selon l'une des revendications 9 à 13, dans laquelle X₁ est CO₂H et Y₁ est choisi parmi un epoxy et une oxazoline.

16. Composition selon la revendication 15, **caractérisée en ce que** X₁ est CO₂H et Y₁-A'-Y₁ est choisi parmi les phénylènes bis oxazolines, de préférence la 1,3 - phénylène-bis(2-oxazoline) ou la 1,4-phénylène-bis(2-oxazoline) (PBO).

17. Composition selon l'une des revendications 1 à 16, **caractérisée en ce qu'**elle comprend un renfort fibreux avec des fibres longues, en particulier à section circulaire avec L/D > 1000, de préférence > 2000 et plus particulièrement sélectionnées parmi les fibres de verre, de carbone, de céramique, d'aramide ou leurs mélanges, en particulier des fibres de verre.

18. Composition selon l'une des revendications 1 à 17, **caractérisée en ce qu'**il s'agit d'une composition de moulage.

19. Polymère issu d'un prépolymère et d'un allongeur de chaîne tels que définis dans l'une des revendications 12 à 16.

20. Procédé de fabrication d'un matériau composite thermoplastique, en particulier d'une pièce mécanique ou d'une pièce de structure à base dudit matériau, de composition telle que définie selon l'une des revendications 1 à 18, **caractérisé en ce qu'**il comprend au moins une étape de polymérisation d'au moins une composition réactive a) telle que définie selon l'une des revendications 9 à 16 ou une étape de moulage ou de mise en oeuvre d'au moins une composition non réactive b), telle que définie selon la revendication 8.

21. Procédé selon la revendication 20, **caractérisé en ce qu'**il comprend les étapes suivantes :
i) imprégnation à l'état fondu d'un renfort fibreux par une composition telle que définie selon l'une des revendications 1 à 18 mais ne comprenant pas ledit renfort fibreux dans un moule ouvert ou fermé ou hors moule, afin d'obtenir une composition telle que définie selon l'une des revendications 1 à 18,
ii) réaction de polymérisation dans le cas d'une composition réactive a) de polyamide selon l'une des revendications 9 à 16, par chauffage de ladite composition de l'étape i) avec allongement de chaîne, suivant le cas, par réaction de polycondensation ou par réaction de polyaddition, en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en en oeuvre ou moulage de ladite composition de l'étape i) dans le cas d'une composition de polyamide non réactive b) pour former la pièce composite finale dans un moule ou avec un autre système de mise en oeuvre et, dans le cas d'une composition réactive a), une étape de mise en oeuvre par moulage ou par un autre système de mise en oeuvre et simultanément avec l'étape ii) de polymérisation.

22. Procédé selon la revendication 21, caractérisé en ce ladite mise en oeuvre est réalisée selon un procédé RTM, S-RIM, injection-compression, pultrusion ou par infusion, en particulier dans le cas d'une composition réactive a).

23. Procédé selon la revendication 22, caractérisé en ce ladite mise en oeuvre est réalisée par thermocompression de préimprégnés sous pression réduite.

24. Utilisation d'une composition telle que définie selon l'une des revendications 1 à 18 pour la fabrication de pièces mécaniques ou de structure à base dudit matériau composite.

25. Utilisation selon la revendication 24, **caractérisée en ce que** lesdites pièces mécaniques ou de structure dudit matériau composite concernent des applications dans le domaine de l'automobile, électrique et l'électronique, ferroviaire, marin (maritime), de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

26. Utilisation selon la revendication 25, **caractérisée en ce qu'**elle concerne des applications dans le domaine de l'éolien et **en ce que** ladite Tg dudit polyamide est d'au moins 80°C, de préférence d'au moins 90°C.

27. Utilisation selon la revendication 25, **caractérisée en ce qu'**elle concerne des applications dans le domaine de l'automobile et **en ce que** ladite Tg dudit polyamide est d'au moins 100°C.

28. Utilisation selon la revendication 25, **caractérisée en ce qu'**elle concerne des applications dans le domaine de l'aéronautique et **en ce que** ladite Tg dudit polyamide est d'au moins 120°C.

29. Matériau composite thermoplastique **caractérisé en ce qu'**il résulte de l'utilisation d'au moins une composition pour matériau composite thermoplastique telle que définie selon l'une des revendications 1 à 18.

30. Pièce mécanique ou de structure de matériau composite thermoplastique, **caractérisée en ce qu'**elle résulte de l'utilisation d'au moins une composition telle que définie selon l'une des revendications 1 à 18 ou qu'elle est à base d'un matériau composite tel que défini selon la revendication 29 ou qu'elle est obtenue par un procédé tel que défini selon l'une des revendications 20 à 23.

31. Pièce de structure selon la revendication 30, **caractérisée en ce qu'**il s'agit d'une pièce automobile post-traitée par cataphorèse.

32. Pièce selon la revendication 30, **caractérisée en ce qu'**il s'agit d'une pièce pour éolienne.

33. Pièce selon la revendication 30, **caractérisée en ce qu'**il s'agit d'une pièce pour l'aéronautique.

## Patentansprüche

1. Zusammensetzung für thermoplastisches Verbundmaterial oder thermoplastische Verbundmaterialzusammensetzung, wobei das Verbundmaterial Verstärkungsfasern oder Faserverstärkung und eine thermoplastische Matrix, die die Fasern (oder die Faserverstärkung) imprägniert, eine Matrix auf Basis mindestens eines thermoplastischen Polymers umfasst, wobei die Zusammensetzung **dadurch gekennzeichnet ist, dass** das thermoplastische Matrixpolymer ein halbkristallines Polyamidpolymer ist, umfassend Amideinheiten Z, 10T und 6T;
- wobei die Zusammensetzung zusätzlich zu den Verstärkungsfasern Folgendes umfasst:
a) eine reaktive Zusammensetzung, umfassend mindestens ein oder bestehend aus mindestens einem reaktiven Polyamidprepolymer (oder Oligomer, wobei Oligomer und Prepolymer im Folgenden das gleiche bedeuten), wobei die Zusammensetzung eine Vorläuferzusammensetzung des Polyamidpolymers der Matrix ist,
oder alternativ zu a)
b) eine nicht reaktive Zusammensetzung von mindestens einem Polyamidpolymer, umfassend das aus der reaktiven Zusammensetzung a) stammende Polymer, wobei die Zusammensetzung jene der thermoplastischen Matrix ist,
und wobei:
- die Zusammensetzung a) oder b) ein oder mehrere Polyamid(e) umfasst oder daraus besteht, darunter statistische Copolyamide oder Sequenzen, die Prepolymere (oder Oligomere) gemäß a) sind oder die Polymere gemäß b) sind, und die Amideinheiten Z, 10T und 6T, ausgewählt wie folgt, umfassen:
- Z, entsprechend einer Amideinheit resultierend aus:
∘ der Kondensation von mindestens einem Lactam oder mindestens einer C₆-C₁₄-Aminosäure,
∘ der Kondensation von einem Diamin und einer Disäure X.Y, wobei X und Y C₄-C₁₈, insbesondere C₁₀-C₁₂ sind,
wobei der molare Gehalt an Z Folgender ist: 0,0 < Z ≤ 30,0 %,
- 10T eine Amid-Haupteinheit ist, die aus der Kondensation eines C₁₀-Diamins, insbesondere Decandiamin, und Terephthalsäure resultiert, die einen Molgehalt von 40,0 bis 95,0 % aufweist,
- 6T eine Amideinheit ist, die aus der Kondensation eines C6-Diamins, insbesondere Hexandiamin, und Terephthalsäure resultiert, die einen Molgehalt von 5,0 bis 60,0 % aufweist,
und mit der Maßgabe, dass die Molgehalte Z + 10T + 6T gleich 100 % betragen, wobei die Zusammensetzung eine Biegetemperatur unter Last (HDT A) unterhalb von 260 °C, insbesondere im Bereich von 210 °C bis weniger als 240 °C, und eine Schmelztemperatur Tf unterhalb von oder gleich 270 °C, besonders unterhalb von oder gleich 265 °C, insbesondere unterhalb von oder gleich 260 °C aufweist.

2. Zusammensetzung nach Anspruch 1, **dadurch gekennzeichnet, dass** das Polyamidpolymer ausgewählt ist aus 6/10T/6T, 12/10T/6T oder 11/10T/6T, insbesondere 11/10T/6T.

3. Zusammensetzung nach Anspruch 1, wobei das Polyamidpolymer ausgewählt ist aus 10.10/10T/6T, 12.10/10T/6T, 10.12/10T/6T, 12.12/10T/6T, vorzugsweise 10.10/10T/6T, 10.12/10T/6T.

4. Zusammensetzung nach einem der Ansprüche 1 bis 3, **dadurch gekennzeichnet, dass** der Molanteil der Einheit Z im Bereich von 5,0 bis 20,0 %, besonders von 9,0 bis 20,0 %, insbesondere von 10,0 bis 20,0 %, mehr bevorzugt von 8,0 bis 15,0 % liegt.

5. Zusammensetzung nach einem der Ansprüche 1 bis 4, **dadurch gekennzeichnet, dass** der Molanteil von 10T im Bereich von 55,0 bis 65,0 %, besonders von 55,0 bis 60,0 %, mehr bevorzugt von 60,0 bis 65,0 % liegt.

6. Zusammensetzung nach einem der Ansprüche 1 bis 5, **dadurch gekennzeichnet, dass** der Molanteil von 6T im Bereich von 15,0 bis 60,0 %, mehr bevorzugt von 20,0 bis 45,0 %, noch mehr bevorzugt von 20,0 bis 30,0 %, insbesondere von 15,0 bis 25,0 % liegt.

7. Zusammensetzung nach einem der Ansprüche 1 bis 6, **dadurch gekennzeichnet, dass** das Polyamidpolymer gemäß der Erfindung 11/10T/6T ist, wobei der Anteil von Einheit 11 im Bereich von 5,0 bis 20,0 %, besonders von 9,0 bis 20,0 %, insbesondere von 10,0 bis 20,0 %, mehr bevorzugt von 8,0 bis 15,0 % liegt, der Anteil von 10T im Bereich von 55,0 bis 65,0 %, besonders von 55,0 bis 60,0 %, mehr bevorzugt von 60,0 bis 65,0 % liegt, und der Anteil von 6T im Bereich von 15,0 bis 60,0 %, mehr bevorzugt von 20,0 bis 45,0 %, noch mehr bevorzugt von 20,0 bis 30,0 %, insbesondere von 15,0 bis 25,0 % liegt.

8. Zusammensetzung nach einem der Ansprüche 1 bis 7, **dadurch gekennzeichnet, dass** die Polyamidzusammensetzung eine nicht reaktive Zusammensetzung gemäß b) ist.

9. Zusammensetzung nach einem der Ansprüche 1 bis 7, **dadurch gekennzeichnet, dass** die Polyamidzusammensetzung eine reaktive Prepolymerzusammensetzung gemäß a) und Vorläufer des Polyamidpolymers der Matrix des Verbundmaterials ist.

10. Zusammensetzung nach Anspruch 9, **dadurch gekennzeichnet, dass** die Zusammensetzung a) mindestens ein reaktives Prepolymer umfasst oder daraus besteht, das an der gleichen Kette der zwei endständigen Funktionen X' und Y' jeweils durch Kondensation untereinander coreaktive Funktionen trägt, wobei X' und Y' jeweils Amin und Carboxy oder Carboxy und Amin sind.

11. Zusammensetzung nach Anspruch 9, **dadurch gekennzeichnet, dass** die reaktive Zusammensetzung a) mindestens zwei untereinander reaktive und jedes jeweils zwei identische endständige Funktionen X' oder Y' tragende Polyamidprepolymere umfasst, wobei Funktion X' eines Prepolymers einzig mit der Funktion Y' des anderen Prepolymers, insbesondere durch Kondensation, reagieren kann, vor allem wobei X' und Y' jeweils Amin und Carboxy oder Carboxy und Amin sind.

12. Zusammensetzung nach Anspruch 9, **dadurch gekennzeichnet, dass** die Zusammensetzung a) oder Vorläuferzusammensetzung Folgendes umfasst oder daraus besteht:
a1) mindestens ein Prepolymer des thermoplastischen Polyamidpolymers, das n endständige reaktive Funktionen X₁ trägt, ausgewählt aus: -NH₂, -CO₂H und -OH, vorzugsweise NH₂ und -CO₂H, wobei n 1 bis 3 ist, vorzugsweise von 1 bis 2, mehr bevorzugt 1 oder 2, mehr bevorzugt 2
a2) mindestens einen Kettenverlängerer Y₁-A'-Y₁, wobei A' ein Kohlenwasserstoffdiradikal von nicht polymerer Struktur ist, das 2 identische reaktive endständige Funktionen Y trägt, die durch Polyaddition mit mindestens einer Funktion X₁ des Prepolymers a1) reaktiv sind, vorzugsweise von einer Molmasse kleiner als 500, mehr bevorzugt kleiner als 400.
wobei Y₁ insbesondere ausgewählt ist aus: Oxazin, Oxazolin, Oxazolinon, Oxazinon, Imidazolin, Epoxid, Isocyanat, Maleimid und cyclischem Anhydrid, besonders aus: Oxazin, Oxazolin, Oxazolinon, Oxazinon, Imidazolin, Epoxid, Maleimid, cyclischem Anhydrid.

13. Zusammensetzung nach einem der Ansprüche 9 bis 12, **dadurch gekennzeichnet, dass** die reaktiven Prepolymere der Zusammensetzung a) eine zahlengemittelte Molmasse Mn aufweisen, die von 500 bis 10000, vorzugsweise von 1000 bis 6000 reicht.

14. Zusammensetzung nach einem der Ansprüche 9 bis 13, wobei X₁ NH₂ oder OH ist, insbesondere NH₂, und Y₁ ausgewählt ist aus einem Oxazinon und einem Oxazolinon.

15. Zusammensetzung nach einem der Ansprüche 9 bis 13, wobei X₁ CO₂H ist und Y₁ ausgewählt ist aus einem Epoxid und einem Oxazolin.

16. Zusammensetzung nach Anspruch 15, **dadurch gekennzeichnet, dass** X₁ CO₂H ist und Y₁-A'-Y₁ ausgewählt ist aus Phenylenbisoxazolinen, vorzugsweise 1,3-Phenylen-bis(2-oxazolin) oder 1,4-Phenylen-bis(2-oxazolin) (PBO).

17. Zusammensetzung nach einem der Ansprüche 1 bis 16, **dadurch gekennzeichnet, dass** sie eine Faserverstärkung mit langen Fasern umfasst, insbesondere mit rundem Querschnitt mit L/D > 1000, vorzugsweise > 2000, und vor allem ausgewählt aus Glas-, Kohlenstoff-, Keramik-, Aramidfasern oder deren Mischungen, insbesondere Glasfasern.

18. Zusammensetzung nach einem der Ansprüche 1 bis 17, **dadurch gekennzeichnet, dass** es sich um eine Formzusammensetzung handelt.

19. Polymer, das aus einem Prepolymer und einem Kettenverlängerer stammt, wie definiert nach einem der Ansprüche 12 bis 16.

20. Verfahren zur Herstellung eines thermoplastischen Verbundmaterials, insbesondere eines mechanischen Teils oder eines Grundstrukturteils des Materials, der Zusammensetzung wie nach einem der Ansprüche 1 bis 18 definiert, **dadurch gekennzeichnet, dass** es mindestens einen Polymerisationsschritt von mindestens einer reaktiven Zusammensetzung a), wie nach einem der Ansprüche 9 bis 16 definiert, oder einen Form- oder Umsetzungsschritt von mindestens einer nicht reaktiven Zusammensetzung b), wie nach Anspruch 8 definiert, umfasst.

21. Verfahren nach Anspruch 20, **dadurch gekennzeichnet, dass** es die folgenden Schritte umfasst:
i) Imprägnierung im geschmolzenen Zustand einer Faserverstärkung durch eine Zusammensetzung wie nach einem der Ansprüche 1 bis 18 definiert, aber die Faserverstärkung nicht umfassend, um eine Zusammensetzung wie nach einem der Ansprüche 1 bis 18 definiert zu erhalten,
ii) Polymerisationsreaktion in dem Fall einer reaktiven Polyamidzusammensetzung a) nach einem der Ansprüche 9 bis 16 durch Erwärmen der Zusammensetzung von Schritt i) mit Kettenverlängerung, je nach Fall, durch Polykondensationsreaktion oder durch Masse-Polyadditionsreaktion im geschmolzenen Zustand, mit, im Fall der Polykondensation, einer Beseitigung der Kondensationsprodukte unter Vakuum mithilfe eines Vakuumextraktionssystems, wenn es sich um eine geschlossene Form handelt, wobei ansonsten und vorzugsweise die Polykondensation in offener Form oder außerhalb einer Form durchgeführt wird,
iii) eine Umsetzung oder Formung der Zusammensetzung von Schritt i) im Fall einer nicht reaktiven Polyamidzusammensetzung b), um ein endgültiges Verbundteil in einer Form oder mit einem anderen Umsetzungssystem zu bilden, und, im Fall einer reaktiven Zusammensetzung a), einen Schritt durch Umformen oder durch ein anderes Umsetzungssystem und gleichzeitig mit dem Polymerisationsschritt ii).

22. Verfahren nach Anspruch 21, **dadurch gekennzeichnet, dass** die Umsetzung nach einem RTM-, S-RTM-, Einspritzungs-Kompressions-, Strangzieh- oder Infusionsverfahren durchgeführt wird, insbesondere im Fall einer reaktiven Zusammensetzung a).

23. Verfahren nach Anspruch 22, **dadurch gekennzeichnet, dass** die Umsetzung durch Thermokompression der Preimprägnate unter verringertem Druck durchgeführt wird.

24. Verwendung einer Zusammensetzung wie nach einem der Ansprüche 1 bis 18 definiert, zur Herstellung von mechanischen Teilen oder Grundstrukturteilen auf Basis des Verbundmaterials.

25. Verwendung nach Anspruch 24, **dadurch gekennzeichnet, dass** die mechanischen Teile oder Strukturteile des Verbundmaterials Anwendungen betreffen im Automobilbereich, Elektrik- und Elektronikbereich, Eisenbahnbereich, Marinebereich (Maritimbereich), Windkraft-, Photovoltaik-, Solarbereich, einschließlich Sonnenpaneele und Komponenten von Solarkraftwerken, Sport-, Aeronautik- und Raumfahrt-, Straßentransportbereich (Lastkraftwagen betreffend), Gebäude-, Bauwesen-, Beschilderungs- und Freizeitbereich.

26. Verwendung nach Anspruch 25, **dadurch gekennzeichnet, dass** sie Anwendungen im Windkraftbereich betrifft und dadurch, dass die Tg des Polyamids mindestens 80 °C, vorzugsweise mindestens 90 °C, beträgt.

27. Verwendung nach Anspruch 25, **dadurch gekennzeichnet, dass** sie Anwendungen im Automobilbereich betrifft und **dadurch, dass** die Tg des Polyamids mindestens 100 °C beträgt.

28. Verwendung nach Anspruch 25, **dadurch gekennzeichnet, dass** sie Anwendungen im Aeronautikbereich betrifft und **dadurch, dass** die Tg des Polyamids mindestens 120 °C beträgt.

29. Thermoplastisches Verbundmaterial, **dadurch gekennzeichnet, dass** es aus der Nutzung von mindestens einer Zusammensetzung für thermoplastisches Verbundmaterial wie nach einem der Ansprüche 1 bis 18 definiert resultiert.

30. Mechanisches Teil oder Strukturteil aus thermoplastischem Verbundmaterial, **dadurch gekennzeichnet, dass** es aus der Verwendung von mindestens einer Zusammensetzung wie nach einem der Ansprüche 1 bis 18 definiert resultiert, oder es auf einem Verbundmaterial wie nach Anspruch 29 definiert basiert, oder es durch ein Verfahren wie nach einem der Ansprüche 20 bis 23 definiert erhalten wird.

31. Strukturteil nach Anspruch 30, **dadurch gekennzeichnet, dass** es sich um ein durch elektrophoretische Abscheidung nachbehandeltes Automobilteil handelt.

32. Teil nach Anspruch 30, **dadurch gekennzeichnet, dass** es sich um ein Teil für Windkraftanlagen handelt.

33. Strukturteil nach Anspruch 30, **dadurch gekennzeichnet, dass** es sich um ein Teil für die Aeronautik handelt.

## Claims

1. A composition for a thermoplastic composite or composition of thermoplastic composite material, said composite material comprising strengthening fibers or fibrous strengthener and a thermoplastic matrix impregnating said fibers (or said fibrous strengthener), a matrix based on at least one thermoplastic polymer, said composition being **characterized in that** said matrix thermoplastic polymer is a semi-crystalline polyamide polymer comprising amide units Z, 10T and 6T;
- said composition comprising, in addition to said strengthening fibers:
a) a reactive composition comprising or consisting of at least one reactive polyamide prepolymer (or oligomer, with oligomer and prepolymer meaning the same in what follows), said composition being a precursor composition of said polyamide polymer of said matrix,
or in alternative to a)
b) a non-reactive composition of at least one polyamide polymer, including the polymer from the reactive composition a), said composition being that of said thermoplastic matrix,
and where:
- said composition a) or b) comprising or consisting of one or more polyamides, including statistical or sequenced copolyamides that are prepolymers (or oligomers) according to a) or that are polymers according to b) and which comprise amide units Z, 10T and 6T, selected as follows:
- Z corresponding to an amide unit resulting:
∘ from the condensation of at least one lactam or of at least one C₆-C₁₄ amino acid,
∘ from the condensation of a diamine and a diacid X.Y, X and Y being C₄-C18, particularly C₁₀-C₁₂,
the molar content of Z being: 0.0 <Z ≤ 30.0%,
- 10T being an amide motif in the majority, resulting from the condensation of a C₁₀ diamine, particularly decanediamine, and terephthalic acid, present at a molar content ranging from 40.0 to 95.0%,
- 6T being an amide unit resulting from the condensation of a C6 diamine, particularly hexanediamine, and terephthalic acid, present at a molar content ranging from 5.0 to 60.0%,
and under the condition that the sum of molar contents Z + 10T + 6T is equal to 100%, said composition having a deflection temperature under load (HDT A) below 260°C, particularly from 210°C to less than 240°C and a melting temperature Tm less than or equal to 270°C, in particular less than or equal to 265°C, particularly less than or equal to 260°C.

2. The composition according to claim 1, **characterized in that** the polyamide polymer is chosen from 6/10T/6T, 12/10T/6T or 11/10T/6T, particularly 11/10T/6T.

3. The composition according to claim 1, wherein the polyamide polymer is chosen from 10.10/10T/6T, 12.10/10T/6T, 10.12/10T/6T, 12.12/10T/6T, preferably 10.10/10T/6T, 10.12/10T/6T.

4. The composition according to one of claims 1 to 3, **characterized in that** the molar proportion of unit Z is comprised from 5.0 to 20.0%, in particular from 9.0 to 20.0%, particularly from 10.0 to 20.0%, more preferably from 8.0 to 15.0%.

5. The composition according to one of claims 1 to 4, **characterized in that** the molar proportion of 10T is comprised from 55.0 to 65.0%, in particular from 55.0 to 60.0%, more preferably from 60.0 to 65.0%.

6. The composition according to one of claims 1 to 5, **characterized in that** the molar proportion of 6T is comprised from 15.0 to 60.0%, more preferably from 20.0 to 45.0%, even more preferably from 20.0 to 30.0%, particularly from 15.0 to 25.0%.

7. The composition according to one of claims 1 to 6, **characterized in that** the polyamide polymer of the invention is 11/10T/6T wherein the proportion of unit 11 is comprised from 5.0 to 20.0%, in particular from 9.0 to 20.0%, particularly from 10.0 to 20.0%, more preferably from 8.0 to 15.0%, the proportion of 10T is comprised from 55.0 to 65.0%, in particular from 55.0 to 60.0%, more preferably from 60.0 to 65.0%, and the proportion of 6T is comprised from 15.0 to 60.0%, more preferably from 20.0 to 45.0%, even more preferably from 20.0 to 30.0%, particularly from 15.0 to 25.0%.

8. The composition according to one of claims 1 to 7, **characterized in that** said polyamide composition is a non-reactive composition according to b).

9. The composition according to one of claims 1 to 7, **characterized in that** said polyamide composition is a reactive prepolymer composition according to a) and a precursor of said polyamide polymer of said matrix of the composite.

10. The composition according to claim 9, **characterized in that** said composition a) comprises or consists of at least one reactive prepolymer carrying on the same chain two terminal functions X' and Y', functions that respectively react together by condensation, with X' and Y' being amine and carboxyl or carboxyl and amine respectively.

11. The composition according to claim 9, **characterized in that** said reactive composition a) comprises at least two polyamide prepolymers that react together and each carry respectively two identical terminal functions X' or Y', where said function X' of a prepolymer can react only with said function Y' of the other prepolymer, particularly by condensation, more particularly with X' and Y' being amine and carboxyl or carboxyl and amine respectively.

12. The composition according to claim 9, **characterized in that** said composition a) or precursor composition, comprises or consists of:
a1) at least one prepolymer of said thermoplastic polyamide polymer, bearing n reactive terminal functions X₁, chosen from: -NH₂, -CO₂H and -OH, preferably NH₂ and -CO₂H with n being from 1 to 3, preferably from 1 to 2, more preferably 1 or 2, more particularly 2
a2) at least one chain extender Y₁-A'-Y₁, with A' being a hydrocarbon biradical, with non-polymeric structure, bearing 2 identical terminal reactive functions Y, reactive by polyaddition with at least one function X₁ of said prepolymer a1), preferably having a molecular mass less than 500, more preferably less than 400.
specifically Y₁ is chosen from: oxazine, oxazoline, oxazolinone, oxazinone, imidazoline, epoxy, isocyanate, maleimide and cyclic anhydride, in particular from: oxazine, oxazoline, oxazolinone, oxazinone, imidazoline, epoxy, maleimide, cyclic anhydride.

13. The composition according to one of claims 9 to 12, **characterized in that** said reactive prepolymers of said composition a) have a number average molecular weight Mn ranging from 500 to 10 000, preferably from 1000 to 6000.

14. The composition according to one of claims 9 to 13, wherein X₁ is NH₂ or OH, particularly NH₂, and Y₁ is chosen from an oxazinone and an oxazolinone.

15. The composition according to one of claims 9 to 13, wherein X₁ is CO₂H and Y₁ is chosen from an epoxy and an oxazoline.

16. The composition according to claim 15, **characterized in that** X₁ is CO₂H and Y₁-A'-Y₁ is chosen from phenylene bis oxazolines, preferably 1,3-phenylene-bis(2-oxazoline) or 1,4-phenylene-bis(2-oxazoline) (PBO).

17. The composition according to one of claims 1 to 16, **characterized in that** it comprises a fibrous reinforcement with long fibers, in particular with a circular cross-section with L/D > 1000, preferably > 2000 and more particularly selected from fibers of glass, of carbon, of ceramic, of aramid or mixtures thereof, particularly glass fibers.

18. The composition according to one of claims 1 to 17, **characterized in that** it is a molding composition.

19. The polymer from a prepolymer and a chain extender as defined in one of claims 12 to 16.

20. A production method for a composite thermoplastic material, in particular for a mechanical part or a structural part the base of which is said material, with composition as defined according to one of claims 1 to 18, **characterized in that** it comprises at least one step of polymerization of at least one reactive composition a) as defined according to one of claims 9 to 16 or a step of molding or of implementing at least one non-reactive composition b) as defined according to claim 8.

21. The method according to claim 20, **characterized in that** it comprises the following steps:
i) impregnation when melted of a fibrous strengthener by a composition as defined according to one of claims 1 to 18 but not comprising said fibrous strengthener in an open or closed mold or without a mold, to produce a composition as defined according to one of claims 1 to 18,
ii) polymerization reaction in the case of a reactive polyamide composition a) according to one of claims 9 to 16, by the heating of said composition from step i) with chain extension, according to the case, by polycondensation reaction or by polyaddition reaction, in the mass when melted, with in the case of the polycondensation, an elimination under vacuum of the condensation products when it is a closed mold, using an extraction system under vacuum, otherwise and preferably with the polycondensation being conducted in an open mold or out of a mold,
iii) an implementation or molding of said composition from step i) in the case of a non-reactive composition b) to form the final composite part in a mold or with another implementation system and, in the case of a reactive composition a), a step of implementation by molding or by another implementation system and simultaneously with polymerization step ii).

22. The method according to claim 21 **characterized in that** said implementation is achieved according to a technique of RTM, S-RIM, injection-compression, pultrusion or by infusion, particularly in the case of a reactive composition a).

23. The method according to claim 22, **characterized in that** said implementation is achieved by thermocompression of preimpregnates under reduced pressure.

24. Use of a composition as defined according to one of claims 1 to 18 for the manufacturing of mechanical or structural parts based on said composite material.

25. The use according to claim 24, **characterized in that** said mechanical or structural parts of said composite material relate to applications in the domain of automotive, electric or electronic, rail, marine (maritime), wind power, photovoltaic, solar, including solar panels and components for solar plants, sports, aeronautics and space, road transport (relating to trucks), construction, civil engineering, signs and leisure.

26. The use according to claim 25, **characterized in that** it relates to applications in the domain of wind power and **in that** the Tg of said polyamide is at least 80°C and preferably at least 90°C.

27. The use according to claim 25, **characterized in that** it relates to applications in the domain of automotive and **in that** said Tg of said polyamide is at least 100°C.

28. The use according to claim 25, **characterized in that** it relates to applications in the domain of aeronautics and **in that** said Tg of said polyamide is at least 120°C.

29. A thermoplastic composite material **characterized in that** it results from the use of at least one composition for thermoplastic composite material as defined according to one of claims 1 to 18.

30. A mechanical or structural part of thermoplastic composite material, **characterized in that** it results from the use of at least one composition as defined according to one of claims 1 to 18 or it is composite material-based as defined according to claim 29 or that it is obtained by a method as defined according to one of claims 20 to 23.

31. A structural part according to claim 30, **characterized in that** it is an automobile part post-treated by cataphoresis.

32. The part according to claim 30, **characterized in that** it is a part for a wind turbine.

33. The part according to claim 30, **characterized in that** it is a part for aeronautics.
